# EUROPEAN PATENT APPLICATION

(11) **EP 3 618 476 A1**
(43) Date of publication of application: **04.03.2020**
(21) Application number: 17921271.7
(22) Date of filing: 10.08.2017
(51) Int. Cl.: H04W 12/04

(54) **WIRELESS COMMUNICATION METHOD AND NETWORK NODE**

(71) Applicant: GUANGDONG OPPO MOBILE TELECOMMUNICATIONS CORP., LTD., Wusha, Chang'an Dongguan, Guangdong 523860 (CN)
(72) Inventor: CHEN, Wenhong, Dongguan Guangdong 523860 (CN); ZHANG, Zhi, Dongguan Guangdong 523860 (CN)
(74) Representative: Penza, Giancarlo
(86) International application number: PCT/CN2017/096870
(87) International publication number: WO 2019/028754

(57) **Abstract**

Provided are a wireless communication method and a network node, which may improve communication performance. The method comprises: a first network node communicates with at least one second network node with regard to transmission related information of a first terminal device, and the first network node and the second network node serve the first terminal device; and the first network node carries out scheduling for the first terminal device according to the transmission related information.

## Description

### Technical Field

Embodiments of the present application relate to the communication field, and more particularly, to a wireless communication method and a network node.

### Background

In a wireless communication system, a terminal device may be served by multiple network nodes, for example, multiple base stations or more transmitting nodes.

In a future wireless communication system, the communication performance is required to be high. How to improve the communication performance for the scenario of multiple network nodes is an urgent problem to be solved.

### Summary

Embodiments of the application provide a wireless communication method and a network node, which may improve communication performance.

In a first aspect, a wireless communication method is provided. The method includes: communicating, by a first network node, with at least one second network node for transmission related information of a first terminal device, wherein the first network node and the second network node serve the first terminal device; and performing, by the first network node, scheduling on the first terminal device according to the transmission related information.

Optionally, the first network node performs uplink scheduling on the first terminal device according to the transmission related information.

In combination with the first aspect, in one possible implementation of the first aspect, the transmission related information comprises at least one of the following:
information of time domain, frequency domain and/or code domain available resources for uplink transmission which the first terminal device performs to the first network node;
information of power upper limit and guaranteed power during the uplink transmission of the first terminal device to the first network node;
information of a waveform used during the uplink transmission of the first terminal device to the first network node;
information of a configuration for transmitting a sounding reference signal (SRS) by the first terminal device;
information of a transmission beam used during the uplink transmission of the first terminal device to the first network node;
information of a reception beam used during receiving the uplink transmission of the first terminal device by the first network node;
information of time domain, frequency domain and/or code domain available resources for uplink transmission which the first terminal device performs to the second network node;
information of power upper limit and guaranteed power during the uplink transmission of the first terminal device to the second network node;
information of a waveform used during the uplink transmission of the first terminal device to the second network node;
information of a transmission beam used during the uplink transmission of the first terminal device to the second network node;
information of a reception beam used during receiving the uplink transmission of the first terminal device by the second network node;
a power headroom report (PHR) which the terminal device reports for the transmission between the terminal device and the first network node and/or the second network node; and information of a capability of the terminal device.

In combination with the first aspect or any above possible implementation thereof, in another possible implementation of the first aspect, capability parameters of the first terminal device include: the quantity of transmission layers supported by the first terminal device.

In combination with the first aspect or any above possible implementation thereof, in another possible implementation of the first aspect, a type of the transmission related information is associated with a quality index of a communication link between the first network node and the second network node.

In combination with the first aspect or any above possible implementation thereof, in another possible implementation of the first aspect, the quality index includes at least one of capacity, latency and reliability.

In combination with the first aspect or any above possible implementation thereof, in another possible implementation of the first aspect, the first network node and the second network node simultaneously send a physical downlink control channel (PDCCH) or a physical downlink shared channel (PDSCH) to the first terminal device.

In combination with the first aspect or any above possible implementation thereof, in another possible implementation of the first aspect, the first network node and the second network node simultaneously send the PDCCH or PDSCH to the first terminal device through carriers which are partially overlapped in at least the frequency domain.

In combination with the first aspect or any above possible implementation thereof, in another possible implementation of the first aspect, the first network node and the second network node perform downlink transmission to the first terminal device through different transmission beams and/or different antenna panels.

In combination with the first aspect or any above possible implementation thereof, in another possible implementation of the first aspect, the first network node and the second network node belong to a same cell; or the first network node and the second network node belong to different cells.

In combination with the first aspect or any above possible implementation thereof, in another possible implementation of the first aspect, the first terminal device is a terminal device; or the first terminal device is composed of terminal devices in at least one terminal device group; or the first terminal device is composed of terminal devices in at least one cell.

Optionally, the terminal devices for different transmission related information may be of different granularities.

In a second aspect, a network device is provided for implementing the method in the first aspect or in any possible implementation of the first aspect described above. Specifically, the network node includes function modules for implementing the method in the first aspect or in any possible implementation of the first aspect described above.

In a third aspect, a network node is provided, which includes a processor, a memory, and a transceiver. The processor, the memory, and the transceiver communicate with each other through internal connection paths to transfer control and/or data signals, so that the network node implements the method in the first aspect or any possible implementation mode of the first aspect described above.

In a fourth aspect, a computer readable medium is provided for storing a computer program. The computer program includes instructions used for executing the first aspect or any possible implementation of the first aspect.

In a fifth aspect, a computer program product containing instructions is provided, when the instructions are run on a computer, the computer is caused to perform the method of the first aspect or any one of optional implementations of the first aspect.

Therefore, in an embodiment of the present application, a network node may perform communication (such as interaction or acquisition of transmission related information from other network nodes) with other network nodes for transmission related information of a terminal device, and may perform scheduling for the terminal device according to the transmission related information. Therefore, it may be realized that one network node refers to the transmission related information for the terminal device on other nodes, or multiple network nodes perform interactive negotiation of the transmission related information of the terminal device, so that the terminal device may be scheduled better, the communication performance may be improved, and the complexity of the implementation of the terminal device may be reduced.

### Brief Description of Drawings

FIG. 1 is a schematic diagram of interaction of devices in a communication system according to an embodiment of the present application.
FIG. 2 is a schematic diagram of interaction of devices in a communication system according to an embodiment of the present application.
FIG. 3 is a schematic diagram of a wireless communication method according to an embodiment of the present application.
FIG. 4 is a schematic block diagram of a network node according to an embodiment of the present application.
FIG. 5 is a schematic block diagram of a system chip according to an embodiment of the present application.
FIG. 6 is a schematic block diagram of a communication device according to an embodiment of the present application.

### Detailed Description

Hereinafter, technical solutions in the embodiments of the present application will be described with reference to the accompanying drawings.

The technical solutions of the embodiments of the present application may be applied to various communication systems, such as, a Global System of Mobile communication (GSM) system, a Code Division Multiple Access (CDMA) system, a Wideband Code Division Multiple Access (WCDMA) system, a General Packet wireless Service (GPRS) system, a Long Term Evolution (LTE) system, a LTE Frequency Division Duplex (FDD) system, a LTE Time Division Duplex (TDD) system, a Universal Mobile Telecommunication System (UMTS) system, a Worldwide Interoperability for Microwave Access (WiMAX) communication system, or a future 5G (also known as New Radio (NR)) system.

The network node mentioned in an embodiment of the present application may be a device that communicates with a terminal device. The network node may provide communication coverage for a specific geographical area, and may communicate with a terminal device (e.g., UE) in the coverage area. Optionally, the network node may be a Base Transceiver Station (BTS) in a GSM system or CDMA system, a NodeB (NB) in a WCDMA system, an Evolutional Node B (eNB or eNodeB) in an LTE system, or a radio controller in a Cloud Radio Access Network (CRAN). Or the network device may be a relay station, an access point, different antenna panels in a same base station, a transmitting-Receiving point (TRP), a vehicle-mounted device, a wearable device, a network side device in a future 5G network, or a network device in a future evolved Public Land Mobile Network (PLMN), etc.

The terminal device mentioned in an embodiment of the present application may be mobile or fixed. Optionally, the terminal device may be referred to as an access terminal, a User Equipment (UE), a subscriber unit, a subscriber station, a mobile station, a mobile platform, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device or another processing device connected to a wireless modem, a vehicle-mounted device, a wearable device, a terminal device in a future 5G network, a terminal device in a future evolved Public Land Mobile Network (PLMN), or the like.

Optionally, in an embodiment of the present application, multiple network nodes may jointly serve a terminal device.

Optionally, multiple network nodes may perform downlink transmission to a terminal device through different beams. For example, the network node 1 and the network node 2 may perform downlink transmission to a terminal device through different beams.

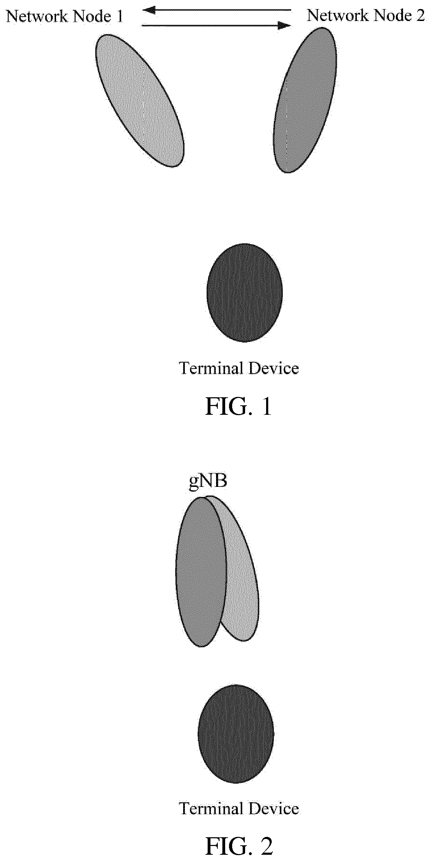

Optionally, in an embodiment of the present application, as shown in FIG. 1, information may be exchanged between multiple network nodes.

Optionally, in an embodiment of the present application, different network nodes may be located in different cells, and an example is shown in FIG. 1. Alternatively, different network nodes may be transmission nodes in the same base station (gNB), and an example is shown in FIG. 2.

Optionally, in an embodiment of the present application, multiple network nodes may send multiple PDCCHs to a terminal device respectively.

In this case, the terminal device may receive only one control channel, and the control channel indicates scheduling information of multiple network nodes. (At this case, a control channel sent by each network node may carry scheduling information of the scheduling which the multiple network nodes perform on a terminal device.)

Optionally, the terminal device receives respectively a control channel sent from each network node, and each control channel may only carry scheduling information of the scheduling which a corresponding sender performs on the terminal device.

Optionally, in an embodiment of the present application, the terminal device may perform uplink transmission respectively to multiple network nodes.

The following describes how a network node performs scheduling on a terminal device in the condition where the terminal device needs to perform uplink transmission respectively to multiple network nodes.

It should be understood that, uplink scheduling which a network device performs on a terminal device is taken as an example for illustration in many places below, however, the scheme of the embodiment of the present application may also be used in a scenario where a network device performs downlink transmission on a terminal device.

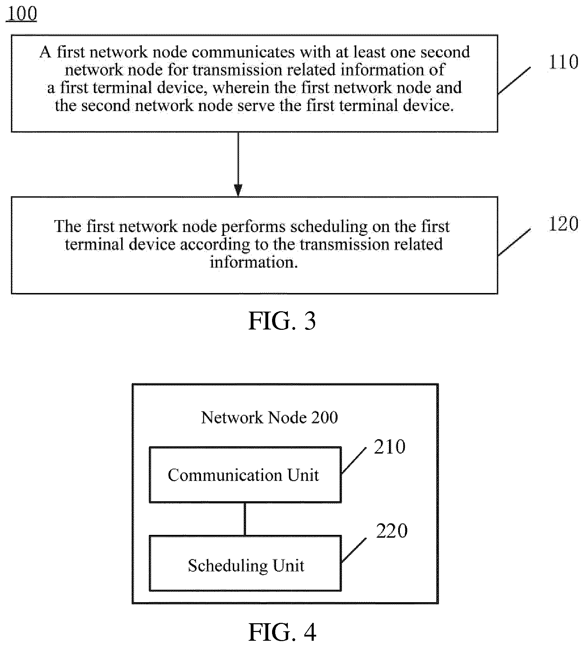

FIG. 3 is a schematic flowchart of a wireless communication method 100 according to an embodiment of the present application. The method 100 includes at least some of the following contents.

In act 110, a first network node communicates with at least one second network node for transmission related information of a first terminal device, wherein the first network node and the second network node serve the first terminal device.

In act 120, the first network node performs scheduling on the first terminal device according to the transmission related information.

Optionally, the first network node performs uplink scheduling on the first terminal device according to the transmission related information.

Therefore, in an embodiment of the present application, a network node may perform communication (such as interaction or acquisition of transmission related information from other network nodes) with other network nodes for transmission related information of a terminal device, and may perform scheduling on the terminal device according to the transmission related information. Therefore, it may be realized that one network node refers to the transmission related information for the terminal device on other nodes, or multiple network nodes perform interactive negotiation of the transmission related information of the terminal device, so that the terminal device may be scheduled better, the system efficiency may be raised, the communication performance may be improved, and the complexity of the implementation of the terminal device may be reduced.

Optionally, in an embodiment of the present application, the transmission related information of the terminal device refers to the information required by the terminal device for uplink and downlink transmission. For example, when a terminal device performs communication with a network node, it may affect the communication between the terminal device and other network nodes, and the transmission related information may be information related to the communication between the terminal device and the network node.

Optionally, in an embodiment of the present application, the transmission related information includes at least one of the following:
information of time domain, frequency domain and/or code domain available resources for uplink transmission which the first terminal device performs to the first network node, for example, a Physical Uplink Control Channel (PUCCH);
information of power upper limit and guaranteed power during the uplink transmission of the first terminal device to the first network node;
information of a waveform used during the uplink transmission of the first terminal device to the first network node;
information of a configuration for transmitting a sounding reference signal (SRS) by the first terminal device;
information of a transmission beam used during the uplink transmission of the first terminal device to the first network node;
information of a reception beam used during receiving the uplink transmission of the first terminal device by the first network node;
information of time domain, frequency domain and/or code domain available resources for uplink transmission which the first terminal device performs to the second network node;
information of power upper limit and guaranteed power during the uplink transmission of the first terminal device to the second network node;
information of a waveform used during the uplink transmission of the first terminal device to the second network node;
information of a transmission beam used during the uplink transmission of the first terminal device to the second network node;
information of a reception beam used during receiving the uplink transmission of the first terminal device by the second network node;
a power headroom report (PHR) which the terminal device reports for the transmission between the terminal device and the first network node and/or the second network node; and
information of a capability of the terminal device, for example, the quantity of transmission layers supported by the first terminal device.

Optionally, the waveform mentioned in the embodiment of the present application may be an orthogonal frequency division multiplexing (OFDM) waveform or a Discrete Fourier Transform-Spread-OFDM (DFT-S-OFDM) waveform.

Optionally, the terminal device reports the power headroom report for the transmission between the terminal device and the first network node. In other words, the terminal device calculates the PHR based on the communication with the first network node without considering the communication with the second network node.

Optionally, the terminal device reports the power headroom report for the transmission between the terminal device and the second network node. In other words, the terminal device calculates the PHR based on the communication with the second network node without considering the communication with the first network node.

Optionally, the terminal device reports the power headroom report for the transmission between the terminal device and the first network node and the transmission between the terminal device and the second network node. In other words, the terminal device calculates the PHR based on the communication with the first network node and the second network node.

Optionally, the type of the transmission related information is associated with a quality index of a communication link between the first network node and the second network node.

Specifically, embodiments of the present application may be applied to the following four scenarios.
Scenario 1: Multiple network nodes belong to a same cell, and the backhaul between the network nodes is ideal. In other words, information interchange may be carried out quickly and dynamically.
Scenario 2: Multiple network nodes belong to a same cell, and the backhaul between the network nodes is not ideal. In other words, information interchange cannot be carried out quickly between the network nodes, and only relatively slow data interchange may be performed.
Scenario 3: Multiple network nodes belong to different cells, and the backhaul between the network nodes is ideal.
Scenario 4: Multiple network nodes belong to different cells, and the backhaul between the network nodes is not ideal.

For the above four scenarios, the information that may be interchanged (or unilaterally notified) may be different.

For example, for a scenario with poor connection quality between network nodes, information that changes slowly may be interchanged (or unilaterally notified), and information that changes fast may not be interchanged (or unilaterally notified).

For example, for a scenario with good connection quality between network nodes, not only information that changes slowly may be interchanged (or unilaterally notified), but also information that changes fast may be interchanged (or unilaterally notified).

Optionally, in an embodiment of the present application, the quality index of the communication link between the first network node and the second network node may include at least one of capacity, latency and reliability.

Optionally, in an embodiment of the present application, the first network node and the second network node simultaneously send a PDCCH or PDSCH to the first terminal device.

Optionally, in an embodiment of the present application, the first network node and the second network node simultaneously send the PDCCH or PDSCH to the first terminal device through carriers which are partially overlapped in at least the frequency domain.

Optionally, in an embodiment of the present application, the PDCCH and PDSCH sent by the first network node and the second network node may be simultaneously received by the terminal device through carriers which are partially overlapped in at least the frequency domain.

Optionally, in an embodiment of the present application, the carrier refers to a maximum transmission bandwidth which is visible to the terminal device and which the network configures for the terminal device.

At least part of component carriers corresponding to multiple uplink links overlap in the frequency domain.

Optionally, in an embodiment of the present application, the first network node and the second network node perform downlink transmission to the first terminal device through different transmission beams and/or different antenna panels.

Optionally, the first network node and the second network node belong to a same cell, or the first network node and the second network node belong to different cells.

Optionally, the first terminal device is a terminal device, or the first terminal device is composed of terminal devices in at least one terminal device group, or the first terminal device is composed of terminal devices in at least one cell.

Specifically, when the first network node and the second network node perform communication for the transmission related information, the applicability of the transmission related information may have the following modes.
Mode 1: The transmission related information communicated is applicable to all UEs. (It is similar to cell-specific, but there may be multiple cells involved, that is, this information may be applicable to terminal devices under multiple cells.)
Mode 2: The transmission related information communicated is applicable to a UE group. (That is, it is group-specific or UE group common.)
Mode 3: The transmission related information communicated is applicable to a single UE. (That is, it is UE-specific.)

It should be understood that the terminal devices for different transmission related information may be of different granularities.

For example, information of time domain, frequency domain or code domain available resources for uplink feedback interchanged may be used for all terminal devices.

For example, information of a capability of a terminal device interchanged may be used for a specific terminal device.

In order to understand the present application more clearly, the present application will be described below with reference to several embodiments. It should be understood that although the following embodiments are described independently for each embodiment, these embodiments may be used in combination if there is no conflict.

### Embodiment One

A network side may send different NR-PDCCHs or NR-PDSCHs from two nodes to a UE. In order to support this transmission scheme, the UE needs to feed back information such as acknowledgement (ACK)/negative acknowledgement (NACK) and Channel State Information (CSI) corresponding to each downlink transmission.

If the uplink feedback from the UE to the two nodes is transmitted through independent channels, there are two ways:
Case 1: Two uplink feedback channels may be sent at the same time.
Case 2: Two uplink feedback channels may be sent at the same time, and by the Time-Division Multiplexing (TDM), sent at different moments.

Different nodes interchange information of time domain and/or frequency domain resources available for the uplink feedback. For example, the nodes interchange frequency resources of PUCCH and the nodes interchange time domain resources of PUCCH.

For example, when the period of the time domain resources is 10 resources (slots or mini-slots), time domain resources 1, 3, 5, 7, 9 may be used for the uplink feedback corresponding to node 1, and time domain resources 0, 2, 4, 6, 8 may be used for the uplink feedback corresponding to node 2.

Unidirectional information notification may be performed between nodes. For example, if node 1 notifies node 2 that time domain resources 1, 3, 5, 7, 9 may be used for uplink feedback corresponding to node 1, node 2 may know not to schedule or use these resources.

### Embodiment Two

A network side may send different NR-PDCCHs or NR-PDSCHs from two nodes to a UE. In order to support this transmission scheme, the UE needs to feed back information such as ACK/NACK and CSI corresponding to each downlink transmission.

In addition, the UE may have uplink data to be transmitted to one node or two nodes. If the uplink transmission (feedback or data transmission) to the two nodes is performed through independent channels, there are two ways:
Case 1: Two uplink channels may be sent at the same time.
Case 2: Two channels may be sent at the same time, and by Time-Division Multiplexing (TDM), sent at different moments.

With regard to case 1, if total transmission power is not enough when two uplink channels are sent at the same time, power control needs to be performed between the two channels. One method is a semi-static power allocation method, that is, the transmission power of the uplink channel corresponding to downlink link 1 (the link between the UE and node 1) is not greater than PI, and the transmission power of the uplink channel corresponding to downlink link 2 (the link between the UE and node 2) is not greater than P2. Therefore, interchange or unidirectional notification of semi-static power allocation information may be performed between the nodes. For example, node 1 notifies node 2 that the power corresponding to node 1 in uplink is p1, or [p1, p2] is interchanged between node 1 and node 2.

### Embodiment Three

A network side may send different NR-PDCCHs or NR-PDSCHs from two nodes to a UE. Layers of transmitted data flows sent by the two nodes to the UE exceed the UE's capability.

For example, the capability of the UE is supporting demodulation of 4 layers at most. If the two nodes send 2 and 4 layers respectively, it is beyond the capability of the UE. As a result, the UE cannot perform demodulation, or a part of data is discarded, which wastes system resources.

Therefore, interchange or unidirectional notification of a relevant capability of the UE may be performed between the nodes. For example, cell 1 notifies cell 2 of the capability of the UE.

### Embodiment Four

A network side may send different NR-PDCCHs or NR-PDSCHs from two nodes to a UE. In order to support this transmission scheme, the UE needs to feed back information such as ACK/NACK and CSI corresponding to each downlink transmission.

In addition, the UE may have uplink data to be transmitted to one node or two nodes. If the uplink transmission (feedback or data transmission) to the two nodes is performed through independent channels, there are two ways:
Case 1: Two uplink channels may be sent at the same time.
Case 2: Two channels may be sent at the same time, and by Time-Division Multiplexing (TDM), sent at different moments.

For case 1, the nodes may coordinate the transmission waveform of the two uplink channels, for example, DFT-s-OFDM or OFDM waveform.

For example, if DFT-s-OFDM is used for the uplink channel corresponding to one downlink link, DFT-s-OFDM is also used for the uplink channel corresponding to another downlink link, which has good effect. Otherwise, the transmission performance will be poor due to power limitation even if OFDM is used.

### Embodiment Five

A network side may send different NR-PDCCHs or NR-PDSCHs from two nodes to a UE. In order to support this transmission scheme, the UE needs to send SRS signals in uplink for two purposes:
A) for downlink Multiple-Input Multiple-Output (MIMO) transmission (in the case of channel reciprocity)
B) for scheduling of uplink transmission

For downlink links of the two nodes, SRS configuration may be performed independently or one SRS configuration may be used in common.

For the case that the SRS configuration is independently performed, time domain, frequency domain and/or code domain resources for the SRS may be coordinated between the nodes.

For using one SRS configuration in common, the nodes may negotiate the specific SRS configuration.

In this embodiment, interchange of SRS configuration information between the nodes may avoid conflicts between SRS signals transmitted on different uplink links (i.e., transmitted simultaneously on the same time-frequency resources).

### Embodiment Six

A network side may send different NR-PDCCHs and NR-PDSCHs from two nodes to a UE. In order to improve the performance in uplink or downlink, the two nodes may interchange the information related to transmission beams of the UE and/or reception beams of the nodes, so as to reduce mutual interference among multiple transmission beams of the UE, or to facilitate the reception beams of the nodes to jointly receive the multiple transmission beams of the UE, or to facilitate the reception beams of the nodes to suppress signals not corresponding to the links.

Therefore, in an embodiment of the present application, a network node may perform communication (such as interaction or acquisition of transmission related information from other network nodes) with other network nodes for transmission related information of a terminal device, and may perform scheduling on the terminal device according to the transmission related information. Therefore, it may be realized that one network node refers to the transmission related information for the terminal device on other nodes, or multiple network nodes perform interactive negotiation of the transmission related information of the terminal device, so that the terminal device may be scheduled better, the system efficiency may be raised, the communication performance may be improved, and the complexity of the implementation of the terminal device may be reduced.

FIG. 4 is a schematic block diagram of a network node 200 according to an embodiment of the present application. As shown in FIG. 4, the network node 200 includes a communication unit 210 and a scheduling unit 220.

The communication unit 210 is used for performing communication with at least one second network node for transmission related information of a first terminal device, wherein the first network node and the second network node serve the first terminal device. The scheduling unit 220 is used for performing scheduling on the first terminal device according to the transmission related information.

Optionally, the transmission related information includes at least one of the following:
information of time domain, frequency domain and/or code domain available resources for uplink transmission which the first terminal device performs to the first network node;
information of power upper limit and guaranteed power during the uplink transmission of the first terminal device to the first network node;
information of a waveform used during the uplink transmission of the first terminal device to the first network node;
information of a configuration for transmitting an SRS by the first terminal device;
information of a transmission beam used during the uplink transmission of the first terminal device to the first network node;
information of a reception beam used during receiving the uplink transmission of the first terminal device by the first network node;
information of time domain, frequency domain and/or code domain available resources for uplink transmission which the first terminal device performs to the second network node;
information of power upper limit and guaranteed power during the uplink transmission of the first terminal device to the second network node;
information of a waveform used during the uplink transmission of the first terminal device to the second network node;
information of a transmission beam used during the uplink transmission of the first terminal device to the second network node;
information of a reception beam used during receiving the uplink transmission of the first terminal device by the second network node;
a PHR which the terminal device reports for the transmission between the terminal device and the first network node and/or the second network node; and
information of a capability of the terminal device.

Optionally, capability parameters of the first terminal device include: the quantity of transmission layers supported by the first terminal device.

Optionally, the type of the transmission related information is associated with a quality index of a communication link between the first network node and the second network node.

Optionally, the quality index includes at least one of capacity, latency and reliability.

Optionally, the first network node and the second network node simultaneously send a physical downlink control channel (PDCCH) or a physical downlink shared channel (PDSCH) to the first terminal device.

Optionally, the first network node and the second network node simultaneously send the PDCCH or PDSCH to the first terminal device through carriers which are partially overlapped in at least the frequency domain.

Optionally, the first network node and the second network node perform downlink transmission to the first terminal device through different transmission beams and/or different antenna panels.

Optionally, the first network node and the second network node belong to a same cell, or the first network node and the second network node belong to different cells.

Optionally, the first terminal device is a terminal device, or the first terminal device is composed of terminal devices in at least one terminal device group, or the first terminal device is composed of terminal devices in at least one cell.

It should be understood that the network node 200 may correspond to the network node in the method embodiment and may implement corresponding operations implemented by the network node in the method embodiment. For the sake of brevity, it will not be repeated here.

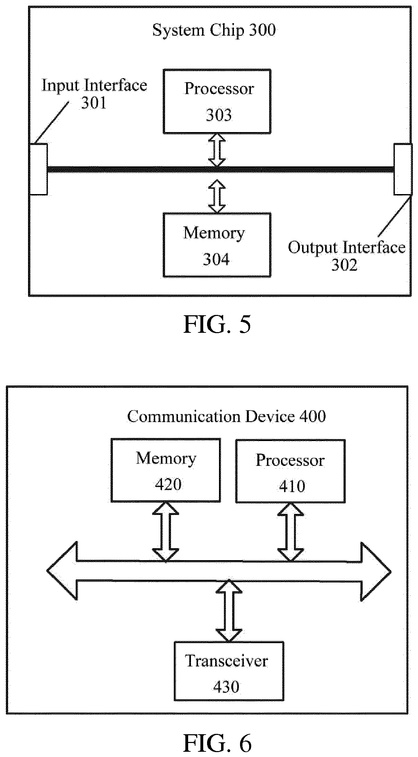

FIG. 5 is a schematic structural diagram of a system chip 300 according to an embodiment of the present application. The system chip 300 of FIG. 5 includes an input interface 301, an output interface 302, a processor 303, and a memory 304, which could be connected through internal communication connection lines. The processor 303 is used for executing codes in the memory 304.

Optionally, when the codes are executed, the processor 303 implements the method implemented by the network node in the method embodiments. For sake of conciseness, the specific description will not be repeated here.

FIG. 6 is a schematic block diagram of a communication device 400 according to an embodiment of the present application. As shown in FIG. 6, the communication device 400 includes a processor 410 and a memory 420. The memory 420 may store program codes, and the processor 410 may execute the program codes stored in the memory 420.

Optionally, as shown in FIG. 6, the communication device 400 may include a transceiver 430, and the processor 410 may control the transceiver 430 to communicate with the external.

Optionally, the processor 410 may call the program codes stored in the memory 420 to perform corresponding operations of the network node in the method embodiments, which will not be described here repeatedly for brevity.

The method embodiments of the present application may be applied to or implemented by a processor. The processor may be an integrated circuit chip with signal processing capability. In the implementation process, the actions of the method embodiments described above may be completed by integrated logic circuits of hardware in the processor or instructions in the form of software. The above processor may be a general purpose processor, a digital signal processor (DSP), an application specific integrated circuit (ASIC), a field programmable gate array (FPGA) or other programmable logic devices, a transistor logic device, or a discrete hardware component. The processor may implement various methods, acts and logic block diagrams disclosed in embodiments of the present application. The general purpose processor may be a microprocessor or the processor may be any conventional processor or the like. The acts of the method disclosed in connection with the embodiment of the present application may be directly embodied by the execution of the hardware decoding processor, or by the execution of a combination of hardware and software modules in the decoding processor. Software modules may be located in a typical storage medium in the art, such as, a random access memory (RAM), a flash memory, a read-only memory, a programmable read-only memory, an electrical erasable programmable memory, or a register. The storage medium is located in the memory, and the processor reads the information in the memory and completes the actions of the above method in combination with its hardware.

It should be understood that the memory in embodiments of the present application may be a transitory memory or non-transitory memory, or may include both transitory and non-transitory memory. The non-transitory memory may be a read-only memory (ROM), a programmable ROM (PROM), an erasable PROM (EPROM), an electrically erasable EPROM (EEPROM), or a flash memory. The transitory memory may be a Random Access Memory (RAM) which serves as an external cache. As an example, but not as a limitation, many forms of RAMs are available, such as a static random access memory (SRAM), a dynamic random access memory (DRAM), a synchronous dynamic random access memory (SDRAM), a double data rate SDRAM (DDR SDRAM), an enhanced SDRAM (ESDRAM), a Synchlink DRAM (SLDRAM), and a Direct Rambus RAM (DR RAM). It should be noted that the memories of the systems and methods described herein are intended to include, but are not limited to, these and any other suitable types of memories.

Finally, it should be noted that the terms used in the embodiments of the present application and the appended claims are for the purpose of describing specific embodiments only and are not intended to limit the embodiments of the present application.

For example, the singular forms "a", "said", and "the" used in the embodiments of the present application and the appended claims are also intended to include the plural forms unless the context clearly indicates other meanings.

For another example, the terms "first type cell group" and "second type cell group" may be used in the embodiment of the present application, but cell groups of these types should not be limited to these terms. These terms are only used to distinguish types of cell groups from each other.

For another example, depending on the context, the word "when" as used herein may be interpreted as "if' or "provided that" or "while" or "in response to a determination of/that" or "in response to a detection of/that". Similarly, depending on the context, the phrase "if determined" or "if detected (a stated condition or event)" may be interpreted as "when ... is determined" or "in response to a determination" or "when (stated condition or event) is detected" or "in response to a detection of (stated condition or event)".

Those of ordinary skill in the art will recognize that the exemplary units and algorithm acts described in connection with the embodiments disclosed herein may be implemented in electronic hardware, or a combination of computer software and electronic hardware. Whether these functions are implemented in hardware or software depends on a specific application and design constraint of the technical solution. Those skilled in the art may use different manners to realize the described functions for each particular application, but such realization should not be considered to be beyond the scope of embodiments of the present application.

Those skilled in the art may clearly understand that for convenience and conciseness of description, the specific working process of the system, device and unit described above may refer to the corresponding process in the embodiments of methods described above, and details are not described herein again.

In several embodiments provided by the present invention, it should be understood that the disclosed systems, devices and methods may be implemented in other ways. For example, the device embodiments described above are only illustrative, for example, the division of the units is only a logical function division, and there may be other division modes in actual implementation, for example, multiple units or components may be combined or integrated into another system, or some features may be ignored or not executed. On the other hand, the mutual coupling or direct coupling or communication connection shown or discussed may be indirect coupling or communication connection through some interfaces, devices or units, and may be in electrical, mechanical or other forms.

The units described as separated components may or may not be physically separated, and the component shown as a unit may or may not be a physical unit, i.e., it may be located in one place or may be distributed over multiple network units. Some or all of the units may be selected according to practical needs to achieve a purpose of the embodiments of the present application.

In addition, various functional units in embodiments of the present application may be integrated in one processing unit, or various units may be physically present separately, or two or more units may be integrated in one unit.

The function units may be stored in a computer readable storage medium if realized in a form of software functional units and sold or used as a separate product. Based on this understanding, the technical solution of embodiments of the present application, in essence, or the part contributing to the existing art, or a part of the technical solution, may be embodied in the form of a software product stored in a storage medium, including several instructions for causing a computer device (which may be a personal computer, a server, or a network device, etc.) to perform all or part of the acts of the methods described in embodiments of the present application. The aforementioned storage medium includes a medium capable of storing program codes, such as, a U disk, a mobile hard disk, a read-only memory (ROM), a magnetic disk or an optical disk, etc.

The foregoing is merely exemplary embodiments of the present application, but the protection scope of embodiments of the present application is not limited thereto. Any person skilled in the art may easily conceive variations or substitutions within the technical scope disclosed by embodiments of the present application, which should be included within the protection scope of embodiments of the present application. Therefore, the protection scope of the embodiments of the present application should be decided by the protection scope of the claims.

## Claims

1. A method for wireless communication, comprising:
communicating, by a first network node, with at least one second network node for transmission related information of a first terminal device, wherein the first network node and the second network node serve the first terminal device; and
performing, by the first network node, scheduling on the first terminal device according to the transmission related information.

2. The method according to claim 1, wherein the transmission related information comprises at least one of the following:
information of time domain, frequency domain and/or code domain available resources for uplink transmission which the first terminal device performs to the first network node;
information of power upper limit and guaranteed power during the uplink transmission of the first terminal device to the first network node;
information of a waveform used during the uplink transmission of the first terminal device to the first network node;
information of a configuration for transmitting a sounding reference signal (SRS) by the first terminal device;
information of a transmission beam used during the uplink transmission of the first terminal device to the first network node;
information of a reception beam used during receiving the uplink transmission of the first terminal device by the first network node;
information of time domain, frequency domain and/or code domain available resources for uplink transmission which the first terminal device performs to the second network node;
information of power upper limit and guaranteed power during the uplink transmission of the first terminal device to the second network node;
information of a waveform used during the uplink transmission of the first terminal device to the second network node;
information of a transmission beam used during the uplink transmission of the first terminal device to the second network node;
information of a reception beam used during receiving the uplink transmission of the first terminal device by the second network node;
a power headroom report (PHR) which the terminal device reports for the transmission between the terminal device and the first network node and/or the second network node; and
information of a capability of the terminal device.

3. The method according to claim 2, wherein capability parameters of the first terminal device comprise: a quantity of transmission layers supported by the first terminal device.

4. The method according to any one of claims 1 to 3, wherein a type of the transmission related information is associated with a quality index of a communication link between the first network node and the second network node.

5. The method according to claim 4, wherein the quality index comprises at least one of capacity, latency and reliability.

6. The method according to any one of claims 1 to 5, wherein the first network node and the second network node simultaneously send a physical downlink control channel (PDCCH) or a physical downlink shared channel (PDSCH) to the first terminal device.

7. The method according to claim 6, wherein the first network node and the second network node simultaneously send the PDCCH or PDSCH to the first terminal device through carriers which are partially overlapped in at least a frequency domain.

8. The method according to any one of claims 1 to 7, wherein the first network node and the second network node perform downlink transmission to the first terminal device through different transmission beams and/or different antenna panels.

9. The method according to any one of claims 1 to 8, wherein the first network node and the second network node belong to a same cell; or,
the first network node and the second network node belong to different cells.

10. The method according to any one of claims 1 to 9, wherein the first terminal device is a terminal device; or
the first terminal device is composed of terminal devices in at least one terminal device group; or
the first terminal device is composed of terminal devices in at least one cell.

11. A network node, wherein the network node is a first network node serving a terminal device, and the network node comprises:
a communication unit, used for communicating with at least one second network node for transmission related information of a first terminal device, wherein the first network node and the second network node serve the first terminal device; and
a scheduling unit, used for performing scheduling on the first terminal device according to the transmission related information.

12. The network node according to claim 11, wherein the transmission related information comprises at least one of the following:
information of time domain, frequency domain and/or code domain available resources for uplink transmission which the first terminal device performs to the first network node;
information of power upper limit and guaranteed power during the uplink transmission of the first terminal device to the first network node;
information of a waveform used during the uplink transmission of the first terminal device to the first network node;
information of a configuration for transmitting a sounding reference signal (SRS) by the first terminal device;
information of a transmission beam used during the uplink transmission of the first terminal device to the first network node;
information of a reception beam used during receiving the uplink transmission of the first terminal device by the first network node;
information of time domain, frequency domain and/or code domain available resources for uplink transmission which the first terminal device performs to the second network node;
information of power upper limit and guaranteed power during the uplink transmission of the first terminal device to the second network node;
information of a waveform used during the uplink transmission of the first terminal device to the second network node;
information of a transmission beam used during the uplink transmission of the first terminal device to the second network node;
information of a reception beam used during receiving the uplink transmission of the first terminal device by the second network node;
a power headroom report (PHR) which the terminal device reports for the transmission between the terminal device and the first network node and/or the second network node; and
information of a capability of the terminal device.

13. The network node according to claim 12, wherein capability parameters of the first terminal device comprise: a quantity of transmission layers supported by the first terminal device.

14. The network node according to any one of claims 11 to 13, wherein a type of the transmission related information is associated with a quality index of a communication link between the first network node and the second network node.

15. The network node according to claim 14, wherein the quality index comprises at least one of capacity, latency and reliability.

16. The network node according to any one of claims 11 to 15, wherein the first network node and the second network node simultaneously send a physical downlink control channel (PDCCH) or a physical downlink shared channel (PDSCH) to the first terminal device.

17. The network node according to claim 16, wherein the first network node and the second network node simultaneously send the PDCCH or PDSCH to the first terminal device through carriers which are partially overlapped in at least a frequency domain.

18. The network node according to any one of claims 11 to 17, wherein the first network node and the second network node perform downlink transmission to the first terminal device through different transmission beams and/or different antenna panels.

19. The network node according to any one of claims 11 to 18, wherein the first network node and the second network node belong to a same cell; or,
the first network node and the second network node belong to different cells.

20. The network node according to any one of claims 11 to 19, wherein the first terminal device is a terminal device; or
the first terminal device is composed of terminal devices in at least one terminal device group; or
the first terminal device is composed of terminal devices in at least one cell.
